Europäisches Patentamt

European Patent Office

Office européen des brevets

(11) Publication number: **0 325 562**
A2

# (12) EUROPEAN PATENT APPLICATION

(21) Application number: **89810050.8**

(51) Int. Cl.⁴: **G 01 N 27/28**
G 01 N 27/30

(22) Date of filing: **20.01.89**

(30) Priority: **21.01.88 US 146313    07.04.88 US 158302**

(43) Date of publication of application:
**26.07.89 Bulletin 89/30**

(84) Designated Contracting States:
**AT BE CH DE ES FR GB GR IT LI LU NL SE**

(71) Applicant: **ELECTRO-NUCLEONICS, INC.**
**350 Passaic Avenue P.O. Box 803**
**Fairfield, NJ 07006  (US)**

(72) Inventor: **Kuhlanek, Antonin**
**47, Avenue du Lignon**
**CH-1219 Geneve  (CH)**

**Deyhimi, Farzad**
**2, Chemin Castelver**
**CH-1255 Veyrier  (CH)**

(74) Representative: **Dousse, Blasco et al**
**7, route de Drize**
**CH-1227 Carouge/Genève  (CH)**

(54) **Dry ion-selective electrodes for the determination of ionic species in aqueous media.**

(57) Dry multilayer electrode for the ion-selective determination of species in solutions. The electrode comprises a conductive layer, a mineral or organic redox couple, a reference electrolyte layer and an ion-selective membrane. The reference electrolyte is an ion-conductive polymeric material carrying covalently bound electrostatically charged groups.

FIG. 1

EP 0 325 562 A2

## Description

## DRY ION-SELECTIVE ELECTRODES FOR THE DETERMINATION OF IONIC SPECIES IN AQUEOUS MEDIA

The present invention concerns dry electrodes with a laminar structure comprising an ion-selective membrane. These electrodes are used for the determination, i.e. measurement of concentration or detection, of selected ionic species in aqueous liquids, e.g. biological fluids, such ionic species including for example $H_3O+$, alkali, earth-alkali and ammonium cations or anions such as halides, $SO_4$-2, $PO_4$-3, $HCO_3$-1 and many others. The invention also deals with the manufacture of said electrodes.

There exist in the prior art many electrodes and similar devices for selectively measuring ions in aqueous solutions.

In general, these electrodes comprise, in addition to an ion-selectively permeable membrane (ISM), an electrochemical internal reference couple or system with stable potential which provides, in connection with an external reference electrode which is simultaneously immersed into an analyte solution, an electrochemical cell whose potential (which can be measured electrometrically) is a function of the amount of ions of a selected species in said analyte solution.

More specifically, this potential is proportional to the logarithm of the activity of the ions selected according to the well known Nernst equation and, as a consequence, of the concentration thereof which can be ascertained by comparison with appropriate standard solutions.

In applications of this kind, the potential E is given by the Nernst equation which has the following form:

$$E = E_o \pm KLnC_i \quad (1)$$

where $E_o$ is the standard potential at 25° C and K is a factor including the valence of the ions to be measured and the absolute measurement temperature. In more detail, the second term of the right member in this equation is given by the ratio $(RT/ZF) Lna_{iz}$ where R is the gas constant, T the temperature in°K, $a_{iz}$ the activity of the ions to be measured having a charge Z, and F is the Faraday constant, i.e. 96,500 Coulomb. However, in practice for highly selective membranes equation (1) is applicable and K is determined by measuring the voltages of a series of samples in which the concentration of the ions selected is known.

The internal reference systems to be used in these cells generally include organic or mineral redox couples together with contact electrolytes whose concentration remains constant (or is supposed to remain so) during the measurement period. Mineral redox couples often comprise a metal and a water insoluble or sparingly soluble salt of this metal. A well known redox couple is the Ag/AgCl system (a silver or silvered substrate coated with a silver chloride film) and the contacting electrolyte is generally a relatively concentrated solution (which may be free or immobilized in a hydrophilic matrix) of a salt or salts. These salts comprise, on one hand, ions corresponding to the ions to be analyzed and, on the other hand, anions identical with the anions of the water-insoluble salt in contact with the base metal. For instance, in the case, e.g. of an F⁻ selective electrode, the salts in the electrolyte may comprise NaF and NaCl in contact with the AgCl/Ag couple. The anion (Cl⁻) participates to the thermodynamically reversible redox reaction of formation of said insoluble salt. For the Ag/AgCl couple, this can be schematized as follows:

Ag + Cl⁻ = AgCl + e

The ionically selective membranes (ISM) to be used jointly with electrodes of this kind may be made of various substances, namely of glass, organic polymer resins, crystalline materials, and heterogeneous materials in the form of films or layers obtained by pressing. The organic IS membranes contains substances defined as "ionophores", i.e. which only allow the ions of the selected species to be measured to pass across the membrane.

The literature disclosing ion-selective electrodes is abundant. Some prominent documents in the field are briefly summarized below.

Swiss patent 604.167 and U.S. Patents Nos. 4,214,968, 4,053,381 and 4,171,246 (Eastman Kodak) disclose dry multilayer laminated electrodes comprising, in succession, an insulative supporting substrate, an electrically conductive metal layer coated with an insoluble salt of this metal, a reference electrolyte and an IS membrane for the selective measurement of a given species of ions. The base metal layer is used also as a terminal for connection with an electrometer. The combination of the metal layer/insoluble salt/reference electrolyte constitutes the internal reference half-cell of stable potential. Alternatively, this set of components can be replaced by a conductive layer coated with an organic redox system, for instance a quinone/hydroquinone couple, this system also providing an internal reference half-cell with a stable potential.

The ionic-selective membrane of the electrodes disclosed in the aforementioned documents is generally made of an organic cross-linked matrix containing, dispersed therein, an "ionophore" substance, i.e. capable as said before to selectively measure ions of a given species and exclude ions of other kinds which may be also present in the solution to be analyzed. As "ionophores", the following can be recited: valinomycin for potassium, nonactin for ammonium and N-tridodecylamine for $H_3O^+$ (pH electrode).

U.S. Patent No. 3,856,649 (Miles) also discloses a similar electrode with a filiform rather than laminar structure.

Great Britain Patent No. 2,106,253 (Fuji) discloses electrodes for the selective determination of ionic species; these electrodes have a laminated structure comprising, in succession, an insulating substrate, a conductive metal layer coated with an insoluble salt of the conductive metal, and a protective cover made of a hydrophobic sheet material with ion-selective properties. This patent also describes a simplified electrode variant in which both the insoluble salt and the reference electrolyte are omitted. The reasons why this electrode which only comprises the conductive base layer and the ion selective layer may be operated reliably are not clear.

U.S. Patent No. 4,454,007 (Du Pont) also discloses a laminar structured ion selective electrode with the following constructive elements: an insulative material base plate; a conductive material layer: a layer of carbon-black powder dispersed in a dielectric polymer and, finally, an ion selective membrane. There is an interpenetration of the material of the carbon-black penultimate layer with that of the ion selective layer at the function boundary. However, some key components are missing in this electrode as in that of the previous patent and, obviously, its performances are less stable and less reliable than that of the electrode comprising a complete internal reference system.

According to usual practice, the electrodes of the kind disclosed in the foregoing patents are used as follows: for the testing of an analyte solution, a little of it is simultaneously contacted with the IS membrane of the test electrode and with an external reference electrode (e.g. a minielectrode). The contact between the analyte and the reference electrode can also be assured by a salt bridge. Then the terminal of both the test electrode and reference electrode are connected to an electrometer for reading the voltage of the cell. In many cases of the prior art, the test electrode and the reference electrode have an identical or similar construction, the reference potential in such case being provided by a standard solution interconnected by a salt bridge between the analyte solution and the reference electrode; the contact with the analyte occurs by diffusion in a porous bridging element, e.g. a gel or a filter paper.

In order to delimit the area of contact between the analyte solution and the test electrode (as well as, in some cases, with the reference electrode), the IS membrane is protected with an insulating and water protecting cover layer which is provided with little recesses or windows which enables the liquid to only contact the area of the IS enclosed by said windows. A construction of this kind will prevent the drop of analyte from overspreading on the ISM membrane surface and possibly leading to uncontrolled measuring conditions. Moreover, since the size of the little holes is constant, their sampling capacity for the analyte stays constant from one to the next test which improves testing reproducibility.

In the prior art electrodes for the selective determination of cations, the most accurate, reliable and stable items comprise, as the internal reference system with stable potential, a reversible redox couple and, in contact therewith, a reference electrolyte capable of assuring reversible transition between the ionic conductivity of the membrane and the electronic conductivity of the base metal, and whose anion is identical with that of the insoluble salt component and whose cation is identical with the ions to be measured.

With electrodes of this kind, the reference electrolyte comprises, as mentioned above in connection with the prior art, a hydrophilic polymer matrix immobilizing a reference salt whose concentration should vary as little as possible during the measurements. For instance, in the case of a potassium ion selective electrode comprising an Ag/AgCl couple, the reference electrolyte salt is preferably potassium chloride dispersed in a hydrophilic binder such as gelatin, agarose, polyacrylamide, dextran, polyhydroxacrylate, polyvinyl alcohol (PVA), etc. The concentration of the salt in the electrolyte and the bulk of the latter are relatively great so that, in the course of the measurements, the variation of the above parameters (which is per se not avoidable) remains negligible.

Yet, in the manufacture of dry laminated electrodes in which a plurality of film-like active components are packed and pressed together, it is desirable, because of miniaturization and cost requirements, to reduce as much as possible the thickness of the reference electrolyte layer but without sacrificing its inherent invariability properties. One has therefore sought to replace the electrolytes embedded in an inert matrix of the prior art with an ionically conductive medium provided with equivalent or better inherent stability characteristics.

The electrode described in claim 1 to which reference is made in the continuation of this disclosure fulfills the desired criteria.

The microporous polymer which constitutes the solid electrolyte of the electrode of the invention is in the dry state during storage; hence the electrode requires no maintenance during this period. The electrode is then conditioned before use by immersion for a few minutes in an appropriate aqueous medium.

Preferably, the solid electrolyte of the present electrode is made of an ion-exchange resin. When the electrode is devised for measuring cations, the ion-exchange resin is a cationic resin, i.e. the functional groups attached to the polymer structure are anionic groups including but not limited to sulfonate, carbo-xylate, phosphonate. Many suitable cation-exchange resins are available on the market, including those sold under the trademarks AMBERLITE® (Rohm & Hass); DOWEX® (Dow Chemicals); DUOLITE® (Diamond Shamrock); DIALON® (Mitsubishi Chemicals); LEWATIT® (Bayer); and NAFION® (Du Pont). Moreover, the use of a solid electrolyte of the kind disclosed in claim 1 suits also the cases where, normally, the reference electrolyte should be a liquid, namely the case of PH electrodes in which, normally, the reference electrolyte is an aqueous acid solution. In the invention, no aqueous acid is needed since the ion-exchange resins can be used in its acidic form.

When using an ion-exchange resin as the electrolyte, the corresponding layer can be very thin because, whatever the thickness, the ionic concentration cannot significantly vary since the functional groups are covalently bound to the polymer backbone. In practice, the thickness of the ion-exchange resin electrolyte is in the order of 10 to 200 um and below that of the ion-selective membrane which may usually be 100 um to 1 mm thick. However, the values given here are only indicative and not critical electrochemically; hence they may vary beyond the above limits depending on the geometry of the electrode and on end-use and constructive requirements.

In the case where ions must be measured, the resins to be used as the solid electrolyte are anionic exchange resins, i.e. polymers carrying cationic functional groups such as substituted or unsubstituted ammonium or phosphonium groups. Anion-exchange resins are also available commercially from the companies listed above and many others known to those skilled in the art.

To manufacture the electrodes of the invention, one interposes a film of ion-exchange resin between a conductive base plate coated with the redox couple and an ion selective membrane. In the case of cation selective electrodes, the ion-exchange resin is generally in the protonated state during manufacture of the electrode. The film can be introduced in the electrode structure either as a sheet of solid resin, or in the form of a liquid solution which is deposited on the surface of one or both the corresponding appropriate electrode members and allowed to evaporate to dryness. Thereafter, the members are assembled together and pressed to provide a solid, ionically conductive laminate structure. Preferably, there is added to the leaf of ion-exchange resin, either in solid or solution form, a proportion of a salt whose cation is identical to the ions to be measured and whose anion is identical with the anion of the insoluble salt which forms, together with the base metal, the redox couple of the electrode. However, this addition is not critical and it should be noted that if the redox couple is purely organic (e.g. quinone/hydroquinone), the addition of the salt has no significance.

The present description refers now to the drawing in which:

Fig. 1 represents schematically an embodiment of an electrode according to the invention and

Fig. 2 is a schematic vertical cross-section of another embodiment of an electrode before complete assembly of the components.

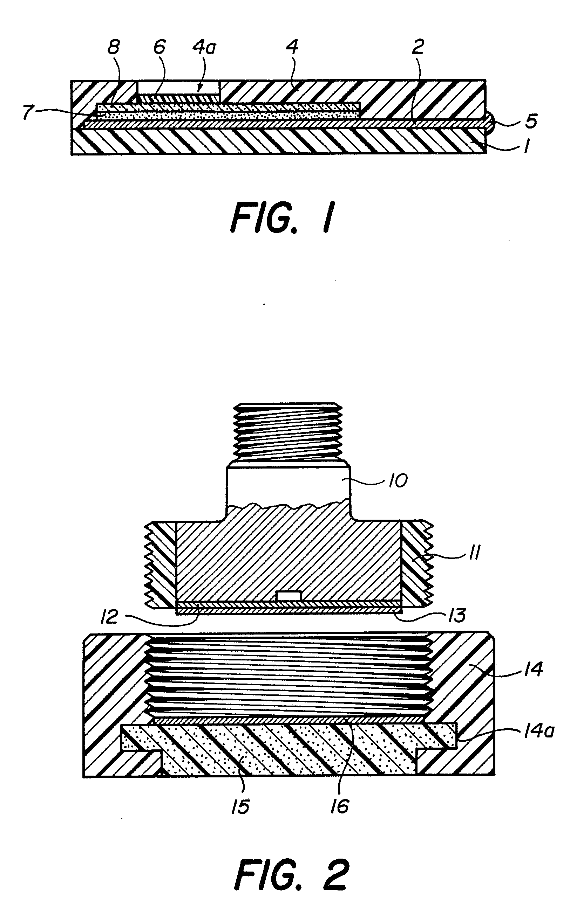

The electrode illustrated in Fig. 1 comprises, in succession, the following constructive components: an insulating base-plate or sheet 1; a layer 2 of electrically conductive metal; a layer 7 of an insoluble salt of the metal of the layer 2; a layer 8 of reference electrolyte consisting of a cationic -exchange resin carrying $SO_3$ groups covalently bound to the resin structure and loaded with cations identical with the ions to be measured in the analytical solution; and finally a mask 4 made of a hydrophobic insulative material. This mask is provided with a hole or window 4a which opens on an ion-selective membrane 6 in contact with the solid electrolyte ion-exchange resin 8. The mask 4 is pressed in a water-tight manner over the remaining elements and prevents any contact of these elements by water or solution otherwise than through window 4a. The electrode is also provided with a stud 5 which contacts the metal of the layer 2 and serves as a connective terminal for an electrometer (not shown).

The ionic selective membrane 6 is applied over the solid electrolyte layer 8 in a water-tight manner within the limits of window 4a. It is sealingly bound to the material of the mask around the walls of the window, i.e. at the junction boundary of said walls and the solid electrolyte layer 8.

If the electrode of this embodiment is designed for measuring potassium ions, the conductive layer 2 can be made of silver and the insoluble salt can be a silver halide, e.g. AgCl. The solid electrolyte film 8 can be made of a sulfonated polytetrafluoroethylene resin with ion-exchange groups in the potassium salt form and containing, optionally, a small portion of $Cl^-$ ions dispersed therein. Naturally, all other variants including other metals, other insoluble salts and other cation-exchange resins are also possible.

For fabricating an electrode of the kind schematized in Fig. 1. one may use as the insulating base 1 a sheet or film or plate of insulative polymer resin. A non-exhaustive list of such resins includes polycarbonate, polyesters, polypropylene, cellulose acetate, nylon, polystyrene and polymethacrylate resin. Actually, the nature of this insulating base is not critical, provided it does not interfere with the operation of the other components of the electrode. As such, it can be made by usual means with usually available materials.

The conductive layer can be made of a metal foil or film,
e.g. Fe, Ag, Cu, Ni, stainless, brass, Zn, Pt or any other
conductive metal which will not corrode under the operative
conditions of the electrode. If, for instance, the layer 2 is made of silver, it may consist of a silver foil 10 - 100 um
thick applied over the resin base 1. Alternatively, it may
consist of a silver plate clad over another metal or directly
on the base 1 by electroless chemical techniques, or by vacuum
evaporation, or by means of a silver paint. To coat a silver layer with an insoluble silver salt, e.g. AgCl, the silver layer may be oxidized by conventional means, e.g. chemically or anodically in the presence of HCl.

In order to provide the solid ion-exchange resin electrolyte layer 8, one may preferably start with a solution, e.g. a solution of 5 parts by weight of NAFION® powder (a perfluorinated sulfonic resin available from Aldrich Chemicals Co.) in 85 parts of ethanol and 10 parts water. This solution can be directly applied over the layer 7 and the solvent is thereafter evaporated to dryness. In a variant, the electrolyte can be applied in prefabricated leaflet form. In this procedure, a layer of solution is spread on a smooth surface and it is thereafter subjected to evaporation until a 20 - 200 um thick film is achieved. Otherwise, a commercially available NAFION-117® sheet 0.007" thick can also be used. This film is cut into the shape of the electrode to provide a leaflet or foil which can be glued by means of a drop of solution to the oxidized metallic layer 7. Then the mask 4 is applied to cover the electrode components and pressed to effect sealing.

The mask 4 can be made of a sheet of thermoplastic or adhesive polymer which can be selected from the same kind of materials used for the insulating base, e.g. polymethylmethacrylate, (FMMA), PVC, polystyrene, and is applied by pressing, with or without heat, to the upper side of the electrode components so as to match the shape thereof. The window 4 is preferably cut in the mask before its application to the other electrode components.

The ion-selective membrane 6 is conventional; it is either a commercially available membrane cut to size or it can be built in-situ from the components in dissolved form. For instance, as in the prior art, it can be made of a binder resin which provides the membrane matrix, a plasticizer and a ionophore. The choice of the ionophore results from the nature of the ionic species to be determined, i.e. valinomycin for K⁺, methylmonensin for Na⁺, selected phosphoric esters for Ca⁺², etc. Detailed indications on specific ionophores to be selected depending on the kind of analysis to be performed can be found in the cited references, especially in U. S. Patent No. 4,454,007.

Many polymers can be used as the resin binders for the IS membrane, e.g. PVC, polystyrene, polyacrylate, polycarbonates, silicone rubber, polyesters, polyamides. The resin of the ISM can be the same as that of the supporting base and the mask 4 , or it can be different. Appropriate adhesion of the mask 4 on the membrane 6 at the periphery of the hole 4a is ensured when the material of the mask is compatible with the resin of the ISM.

The solvents to be used are selected to be convenient solvents for the membrane 6 binder matrix and will depend on the polymeric resins being used. Usually, common organic solvents such as THF, cyclohexanone, DMF, dioxane, chloroform, acetone, MEK and the like are suitable.

The plasticizers to be used in the preparation of the membrane are the commonly used plasticizers in this type of applications, e.g. o-nitrophenyl-octyl ether, dimethylphthalate, dioctylphenyl-phosphonate, dibutylphthalate, hexamethylphosphoramide, dibutyladipate and other plasticizers recited in the aforementioned prior art.

In one specific example briefly summarized below, an electrode according to Fig. 1 is made as follows: A 200 um silver foil is adhered to a 0.1 to 1 mm thick PVC plate; then the silver is anodized for a few minutes in a 0.1N HCl solution under a few hundred milliamps/dm² until a silver chloride layer 1 um to 100 um thick is formed over the silver. Then a solution of ion-exchange resin prepared as disclosed above is layered over the AgCl; the thickness of this layer of solution (around 50 - 500 um) is controlled by applying a frame over the oxidized silver surface to prevent the excess solution from overflowing. Then the solvent is allowed to evaporate to provide a dry resin film. After removing the frame, an adhesive polymer mask, 0.05 - 0.5 mm thick, with an opening corresponding to window 4a is applied as a cover over the electrode construction. Then an inophore solution (for instance valinomycin) comprising PMMA as binder, diethylphthalate plasticizer and MEK as the solvent is poured into the mask opening 4a. The solvent is then evaporated at room temperature under dust free conditions until the formation of the dry membrane is complete. The electrode can then be stored for an indefinite period without attention. It can be conditioned before use by briefly soaking in an aqueous potassium chloride solution.

The electrode represented schematically in Fig. 2 is a variant of the electrode of Fig. 1; the principal variations concern the geometry and the possible end-uses. While the electrode schematized in Fig. 1 is a general purpose electrode to be used with a standard reference electrode in contact with a drop of solution introduced into hole 4a, or with a similar electrode loaded with a standard solution and connected thereto via a bridging porous strip, the electrode of Fig. 2 may be applied to much more sophisticated end-uses as will be seen below. In Fig. 2 two main groups of components of the electrode are represented before being assembled together. This electrode comprises a screw 10 whose head is gold plated initially to prevent corrosion during use. The head of the screw is circled with a threaded insulating sleeve 11 made of a synthetic resin such as polystyrene, lucite or PVC. The screw-head is covered by a silver washer 12 which is electrolytically anodized in HCl, as described before, in order to coat it with a silver chloride layer 13.

In practice, the diameter of the screw head can be about 5 - 10 mm, the thickness of the silver washer about 0.05 - 0.5 mm and the thickness of the AgCl layer a few um.

The electrode further comprises an insulating socket 14 threaded internally and made of a material similar to that of sleeve 11. This socket 14 is

## TABLE 1

| Electrode | pH 5 | pH 6 | pH 7 | pH 8 | pH 9 | | SLOPE |
|---|---|---|---|---|---|---|---|
| 1 | -44.35 (138) | -101.02 (162) | -155.84 (90) | -210.67 (0) | -261.52 (0) | : | 54.82 |
| 2 | 135.34 (120) | 78.23 (168) | 21.28 (0) | -33.92 (0) | -82.14 (0) | : | 56.08 |
| 3 | 33.07 (114) | -23.49 (66) | -80.38(114) | -137.77 (0) | -188.556 (216) | : | 56.73 |
| 4 | 53.35 (78) | -2.15 (30) | -56.81 (0) | -110.99 (0) | -163.54 (6) | : | 56.57 |
| 5 | 59.08 (0) | 4.27 (30) | -51.46 (0) | -106.33 (0) | -157.14 (0) | : | 55.39 |
| 6 | 91.49 (18) | 35.06 (42) | -20.11 (48) | -79.95(12) | -133.16 (0) | : | 57.50 |
| 7 | 66.69 (60) | 10.75 (0) | -45.35 (0) | -98.49 (6) | -156.04 (0) | : | 54.62 |

EP 0 325 562 A2

provided with an internal annular groove 14a which retains a shouldered ion-selective membrane 15 about 0.2 to 1 mm thick. On the internal side of the ISM 15, there is a film 16 of ion-exchange resin which operates as does the solid electrolyte in the embodiment of Fig. 1; this film can be about 50 - 200 um thick.   The electrode is assembled by fitting the head of the screw 10 and the washer 12 into the sleeve 11 and subjecting the outside surface of the silver washer to anodization in diluted HCl to provide the AgCl layer.

Regarding the other group of components, a disk of the shape of the ISM membrane 15 is cut from a sheet of prefabricated ion-selective material and it is introduced, as indicated in the drawing, in the bottom part of the socket 14 where it is retained by its shoulder fitting in groove 14a. Then a film 16 of ion-exchange resin is applied over the internal face of the ISM membrane as shown. This film can be a disk-shaped foil cut from a prefabricated or commercially available film of the ion-exchange resin or it can be deposited insitu from a solution of the resin which is thereafter subjected to evaporation (as disclosed before in the previous embodiment). In the case of a prefabricated foil, the latter can be glued to the ISM membrane, or to the silver chloride, with a drop of the resin solution. Optionally, the film can be preconditioned to the ionic species to be measured by contacting it transiently with a solution of such ions.

It is also possible, for optimal results, to interpose between the layers 13 (AgCl) and 16 (ion-exchange resin) a pellicular layer of chloride of the cation to be measured, for instance by coating one of

TABLE 2

| Electrode No | [NH$_4{}^+$] M | | | | |
|---|---|---|---|---|---|
| | $10^{-5}$ | $10^{-4}$ | $10^{-3}$ | $10^{-2}$ | $10^{-1}$ |
| 8 | --- | -88.32 (0) | -37.45 (0) | 14.73 (18) | 69.14 (12) |
| 9 | -221.92 (6) | -204.33 (0) | -147.66 (75) | -100.97 (75) | --- |
| 10 | -384.69 (105) | -333.50 (0) | -282.12 (3) | -228.88 (0) | --- |

EP 0 325 562 A2

EP 0 325 562 A2

the surfaces of interest with an aqueous solution of this salt and allowing it to evaporate. A solution of KCl is suitable where the electrode is devised to measure K+ ions; NaCl is convenient when Na+ is to be measured. It is interesting to note that KCl is also suitable when measuring other ionic species, for instance $H_3O^+$ (pH electrode). The electrode assembly is completed by screwing sleeve 11 into socket 14 tightly enough to ensure good contact between the various components. If desired, in order to further improve the adhesion and ionic conductivity between the solid electrolyte layer and the surface coming into contact therewith, the latter can be wetted with a little of the ion-exchange resin solution before screwing in the sleeve 11. The following examples will illustrate the invention in more detail.

Example 1

An iron or copper screw 10, with a 6 mm diameter flat head (the thread gauge is unimportant) was selected and gold clad in a 24 crt. cyanide bath (deposit thickness about 5 um). The head was inserted into a 6 mm threaded sleeve 11 of PVC together with a small disk 12 of silver (0.1 mm thick) as shown in Fig. 2. The sleeve had 0.5 - 1 mm thick walls.

The external surface of the silver disk was buffed and scoured with a commercial detergent, after which it was anodized in a 0.1 N HCl solution under 0.3 $A/dm^2$ (7 min). Then the AgCl coated surface was rinsed with distilled water, dried in air and coated with 20 ul of a saturated solution of KCl; this solution was allowed to evaporate at 30 - 50°C under a dust controlled atmosphere.

An ion-selective membrane disk of 5 mm diameter (shoulder 5.2 mm) cut from a 1 mm thick sheet of plastic containing by weight 33% PVC, 66% 2-ethylhexyl adipate and 1% valinomycin was inserted into socket 14 of PVC (external diameter 10 mm) of appropriate internal size as shown in Fig. 1. The IS membrane was designed for $K^+$ ions.

Then, each of the available surfaces of the layer 13 and the internal surface of membrane 15 were coated with 20 ul of a 5% NAFION® aqueous alcohol solution, and the solutions were evaporated to dryness. This provided two half-layers of solid ion-exchange electrolyte 16. Then optionally, the ion-exchange resin films were conditioned for a few seconds by contacting with 0.1 - 1 N aqueous KCl solution.

One drop of the resin solution was further applied between the two groups of components of the electrode and the two groups were put together by screwing sleeve 11 into socket 14. A small hole (diameter 1 mm) was drilled sidewise into the threaded part of the assembly to allow for the remaining solvents to evaporate; this was done by heating in air at 50°C for 12 hrs. The hole was thereafter plugged with molten PVC to restore watertightness.

Example 2

A series of electrodes were prepared by the technique disclosed in Example 1 and devised for the selective measurement of protons (pH electrode). The only significant difference from the electrode of Example 1 pertains to the ion-selective membrane which was prepared as follows:

A ground-end open glass cylinder of 3 cm diameter was applied tightly to a flat piece of glass. Then a solution of a 1 g of a mixture of ingredients in 10

9

TABLE 3

| Electrode No | $10^{-5}$ | $10^{-4}$ | $10^{-3}$ | $10^{-2}$ | $10^{-1}$ |
|---|---|---|---|---|---|
| El-1 | -407.00 (0) | -403.29 (0) | -385.59 (0) | -343.40 (0) | -288.79 (0) |
| El-2 | --- | -168.00 (0) | -151.97 (0) | -111.00 (0) | -53.64 (0) |
| El-3 | --- | -196.85 (0) | -183.47 (0) | -142.03 (0) | -87.34 (0) |

ml of THF was introduced into the cylinder and left to evaporate on the plate. The mixture of ingredients contained by weight 1% of tris-n-dodecylamine (TDDA); 0.6% of potassium tetrakis-(4-chlorophenyl)-borate; 65.6% of o-nitrophenyl-octyl ether, 32.8% of polyvinylchloride. After 48 hrs in air at ambient temperature, the solution was converted, after evaporation of the solvent, into a dry film from which pieces were removed with a cork-punch and used as the disk 15 in the construction of the electrodes. The several electrodes were tested by dipping into buffer solution (Standard TITRISOLS, Merck, 0.1 M) of various ph's. The threaded screw portion of the electrodes were used to connect to an electrometer (Keithly, type 619). The external reference electrode was an Ag/AgCl Ingold minielectrode, type 10.373.3148.

The results are presented in the Table 1. The voltages in this table are given in mV and the differences in the values for different electrodes are due to the structural differences of the electrodes: thickness of the layers and concentrations of the solutions used in construction. It can be seen from the data that despite the differences, the key parameter of the results, i.e. the relative change of the potential with pH (shape of the measuring curves) is quite constant which demonstrates the reliability of the electrodes of the invention despite the variations in the construction factors. The data in parentheses relate to stabilization times (seconds). In some cases the stabilization was practically instantaneous.

Example 3

A series of electrodes were prepared according to the technique described in Example 1. These electrodes were ionically selective for ammonium ions. The specific constructive parameters differing from the electrodes of the previous Examples are as follows:

Composition of the ISM membrane: nonactin 1%; 2-ethylhexyl sebacate 66.8%; PVC 32.2%; 1 g of this mixture for 10 g of THF solvent. The solution was evaporated as in Example 2.

Standard solutions of ammonium chloride in Tris-HCl buffer 0.1M containing 150 mM NaCl and 5 mM KCl were used. Three electrodes of this kind of construction were tested in various $HN_4Cl$ solutions (reference electrode as in example 2). The results are given in Table 2 in the same format as in Table 1. It can be seen that the slope of the measurements is, as expected, in the range of 51 - 52 mV by order of magnitude of ionic concentration.

Example 4

Another series of electrodes like in Example 3 was constructed, the only difference being the replacement of the ion-exchange electrolye layer obtained by evaporation of a NAFION® solution by a prefabricated NAFION-117® foil. The electrodes were conditioned before use as follows: 1 hr in boiling 1N HCl; $H_2O$ rinse; 1 hr in 0.1 M $NH_4DH$ at room temperature. Before making the measurement, the electrodes were allowed to stabilize for 3 min; the drift during this period did not exceed $\pm$ 0.5 mV. During the measurements that followed, the drift stayed below 0.23 mV/min. the test solutions were like those in Example 3, $10^{-5}$ - $10^{-1}$ M $NH_4^+$ in Tris-HCl 0.1 M with, in addition, NaCl (150 mM) and KCl (5mM). The results in mV are found in Table 3.)

Example 5

A piece of 0.3 mm thick PVC board with an adherent 100 um silver foil was selected. A plate about 8 x 12 mm was cut and anodized as described in Example 1. The anodized silver was coated with a layer of a 5% by weight NAFION® solution in aqueous alcohol and the layer was allowed to dry partially in air until it became gluey.

Then a glass membrane of the kind used for making pH glass electrodes (supplier: Corning Glass) was applied over it and pressed firmly to provide good contact between the partly solidified NAFION® and the glass. Actually, the glass membrane was the bottom part of a tiny glass cylinder (about 6 mm diameter) to be normally used as a probe tip in the construction of a pH glass electrode. Therefore, the presence of the glass cylinder facilitated handling the glass membrane and its pressing against the NAFLON® layer.

The assembly was left to dry for a few hours in warm air, whereby it solidified completely.

A portion of the remaining free AgCl area was scraped off and a conductor wire was soldered to the clean silver surface.

The electrode was then ready for testing solutions of various pH which were introduced through the open upper part of the glass cylinder. The test solutions were TITRISOL® samples, PH 1-12. The performance of this electrode was excellent. It gave a response slope of 57.5 mV $\pm$ 0.1 mV over the entire pH interval. The stabilization time was 120 sec, somewhat longer than with the electrodes of Example 2 because of the higher resistance of the glass membrane. The drift after stabilization negligible.

It can be seen from the above data that, in addition to the advantages already mentioned, the electrodes of the invention also provide the following advantages;
- They can be manufactured with many different geometrical shapes.
- They can be used under various orientation, i.e. horizontally or vertically.
- They can be adapted to measure very small quantities of liquid (e.g. one drop).
- They can be stored in the dry state and packed for transportation under largely uncontrolled conditions.
- They can be saved after use and can be reused after cleaning.
- They are provided with a reference system thermodynamically reversible and with an essentially stable potential. One type of ion-exchange polymers generally be used for ions of several different species; the pre-conditioning of the electrolyte to the kind of use is optional; under practical use conditions, the electrolyte will undergo self-conditioning.

- The electrodes can be constructed in laminated, chip or wirelike form and they can easily be miniaturized. The construction can be adapted to end-uses; for instance two electrodes can be used side-by-side or in sandwich configuration with the analyte solution. This method is called "differential potentiometry" and requires an electrometer with two high-impedance inputs and a third input for an electrode which can be a simple conductive metal wire, e.g. a Pt wire connecting the solution to ground. It should be remarked that in such configuration, the functions of the two "test" electrodes according to the invention are interchangeable, i.e. one electrode can be used as the real test electrode and the other as the reference electrode, or vice-versa. The third electrode (wire, ring, etc.) can also be specific to the test electrode depending on the constructions.

## Claims

1. A dry multilayered electrode for selectively determining specific ionic species in aqueous fluids by means of an ionselective membrane comprising, applied as successive components over an electronically conductive base layer, firstly an electrochemical couple with a stable reference potential, secondly, in contact with the couple so as to ensure a reversible transition between the ionic conductivity of said ion-selective membrane and the electronic conductivity of the base layer, a solid reference electrolyte comprising ions akin to the ionic species to be measured and in which the concentration of counter-ions to said ions is kept constant during measurements, and thirdly said ion-selective membrane, wherein said solid reference electrolyte consists of a permeable or microporous mineral or organic polymer and wherein said counter-ions are chemically linked to the polymer, the concentration of said counter-ions being thus invariable.

2. The electrode of claim 1, in which said microporous polymer is an ion-exchange resin.

3. The electrode of claim 2, wherein said ion-selective membrane is adapted for passing cations of a selected species,
and said ion-exchange resin is a cationic resin at least partly loaded with the ions to be measured.

4. The electrode of claim 2, wherin said ion-selective membrane is adapted to pass anions selected from the group consisting of halides, $SO_4^{-2}$ $PO_4^{-3}$, $HCO_3^-$ and said ion-exchange resin is an anionic resin loaded, at least in part, with the anion of the kind to be measured.

5. The electrode of claim 3, wherein the conductive base layer is metallic and provides, in the presence of an insoluble or sparingly soluble salt of this metal applied thereto, said electrochemical couple with stable potential.

6. The electrode of claim 5, wherein said metal is silver and said insoluble salt is a silver halide.

7. The electrode of claim 6, wherein said cationic resin is an organic polymer bearing sulfonic acid groups selected from the group consisting of REXYN® (Fisher Scientific); DOWEX® (Dow Chemicals); AMBERLITE® (Rohm & Haas); IRA® (Sigma Chemicals); and NAFION® (Du Pont).

8. The electrode of claim 7, wherein said resin comprises, in addition to cations akin to the species to be measured, a proportion of halides of these cations.

9. A method for manufacturing electrodes wherein the following components are successively applied over each other and, afterwards, pressed together:
a) an electronically conducting base component;
b) a redox couple for generating an internal stable reference potential
c) a solid reference electrolyte in the form of a body of ion exchange resin; and
d) an ion-selective membrane
wherein said body of ion-exchange resin (c) interposed between components (b) and (d) is applied either in the form of a solid film-like foil, or in the form of a solution of resin which is thereafter subjected to evaporation, the fitting together of all the components resulting in (c) being firmly pressed between (b) and (d) and achieving a good ionic contact between said components.

10. The method of claim 9, wherein some ion-exchange resin solution is applied between components (b), (c) and (d) to improve mutual contact therebetween, and solvents in this solution are evaporated through a transient opening in mounting means for assembling and pressing together the components of the electrode, this evaporation taking place after assembly of said components is complete and the opening being finally plugged to ensure water-tightness to the completed assembly.

11. The method of claim 9, wherein said solid electrolyte component (c) is formed by coating the internal surfaces of elements (b) and (c) with a solution of ion-exchange resin and the solutions are allowed to dry to form a dry film which may, optionally, be preconditioned to an ion to be measured by transiently contacting the film with a solution of that ion;
then two groups of components are assembled together: the first one consisting of components (a) and (b) coated with a film of (c), and the second group consisting of component (d) also coated internally with a film of (c), the two films of (c) being stuck together upon mounting and pressing together said two groups of components.

12. The use of the electrode of claim 1 for measuring selected ions in a solution infused in a porous substrate, which comprises applying the ion-selective membrane of the electrode against the surface of this substrate to establish an ionically conducting contact between said surface and said membrane, and identically applying on said substrate a second electrode selective to an ion different from said selected ion, the concentration of said different ion being essentially constant in the solution during measurements and being used as a reference.

**FIG. 1**

**FIG. 2**